# EUROPÄISCHE PATENTANMELDUNG

(11) **EP 2 436 476 A1**
(43) Veröffentlichungstag der Anmeldung: **04.04.2012**
(21) Anmeldenummer: 10186324.9
(22) Anmeldetag: 01.10.2010
(51) Int. Cl.: B23P 19/04, F01L 3/10

(54) **Werkzeug zum Anbringen von Ventilkeilen am Ventil eines Motors**

(71) Anmelder: ELWEMA Automotive GmbH, 73479 Ellwangen (DE)
(72) Erfinder: Alvarez, Antonio, 52224, Stolberg (DE); Ilg, Eberhard, 73492, Rainau- Saverwang (DE)
(74) Vertreter: Lippert, Stachow & Partner

(57) **Zusammenfassung**

Die Erfindung betrifft ein Werkzeug (10) zum Anbringen von Ventilkeilen (20) an einen Ventilschaft (4). Das Werkzeug umfasst einen längsgestreckten Halter (30) mit einer Längsachse (A), einem inneren Hohlraum (36) und einer Stirnöffnung (34) sowie einen längsgestreckten Kern (40) welcher im Hohlraum (36) des Halters (30) koaxial zur Längsachse (A) angeordnet. Zwei zur Längsachse (A) symmetrische Transportkanäle (44) sind im Werkzeug vorgesehen zum Zuführen von Ventilkeilen (20) an den Ventilschaft.

Die Erfindung ist dadurch gekennzeichnet dass im Endbereich (42) des Kerns (40) koaxial zur Längsachse (A) eine längsgestreckte Ausnehmung (70) zur Aufnahme eines wesentlichen oberen Abschnitts des Ventilschafts (4) vorgesehen ist, wobei die Ausnehmung (70) des Kerns (40) in die Stirnöffnung (34) mündet und eine Tiefe (T) aufweist welche größer oder zumindest gleich dem axialen Abstand (D) zwischen Stirnende und Ringnut des Ventilschafts. Hierdurch wird erreicht, dass der Kern (40), insbesondere dessen Endbereich (42), bei Aufnahme des oberen Abschnitts eines Ventilschafts (4), die mindestens eine Ringnut (16) zumindest teilweise überdeckt, so dass die Ventilkeile (20) unterhalb der mindestens einen Ringnut (16) an die Mantelfläche eines Ventilschafts (4) zugeführt werden können und ein falsches Einrasten zuverlässig vermieden werden kann.

## Beschreibung

### Technisches Gebiet

Die vorliegende Erfindung betrifft allgemein ein Werkzeug zum Anbringen von Ventilkeilen an Steuerventilen, insbesondere bei der Herstellung von Verbrennungsmotoren und allgemein von Hubkolbenmotoren mit Ventilsteuerung.

Insbesondere betrifft vorliegende Erfindung ein Werkzeug zum Zu-, An-und Einbringen von Ventilkeilen zwischen Ventilfederteller und Ventilschaft eines Steuerventils, typischerweise des Ein- oder Auslassventils am Zylinderkopf eines Verbrennungsmotors. Ein solches Werkzeug wird von Fachleuten auch als Verkeilwerkzeug bezeichnet und in einer voll- oder semi-automatische Maschine für die Zylinderkopfmontage verwendet.

### Stand der Technik

Steuerventile für Hubkolbenmotoren sind zur selbsttätigen Rückstellung in die Schließposition durch eine Ventilfeder federbelastet. Diese Ventilfeder ist zwischen dem Referenz-Gestell des Ventils, allgemein ein Zylinderkopf, und einem am Ventilschaft axial gehaltenen Ventilfederteller (nachfolgend: Federteller) eingespannt. Zur axialen Befestigung werden zwischen einer geeigneten Oberfläche im Federteller und Ringnuten am Ventilschaft auf herkömmliche Art speziell geformten Haltekeile, sogenannte Ventilkeile (Engl. valve keys) angebracht. Anhand solcher Ventilkeile wird der Federteller am Schaft verkeilt.

Zum Anbringen der Ventilkeile sind sogenannte Ventilkeilpistolen für manuelle Bedienung seit langem bekannt. Die vorliegende Erfindung betrifft jedoch insbesondere ein spezielles Verkeilwerkzeug für eine automatisierte Maschine von der Gattung wie beispielsweise in der Deutschen Patentschrift DE 196 52 711 beschrieben.

Die DE 196 52 711 beschreibt ein gattungsgemäßes Verkeilwerkzeug zum Anbringen von Ventilkeilen an einem Ventil eines Motors. Dieses umfasst einen längsgestreckten Führungskörper bzw. Halter mit einer Längsachse und einer Stirnöffnung durch welche das Stirnende des Ventilschafts geringfügig in den Hohlraum des Halters eintreten kann. Innen in einem Hohlraum im Halters ist ein stiftartiger längsgestreckter Kern koaxial zur Längsachse angeordneten. Der Stift hat einen Endbereich, welcher für das obere Stirnende des Ventilschafts zugänglich ist. Zum genauen Positionieren des Werkzeugs in der für das Einbringen der Ventilkeile erforderlichen Arbeitsstellung relativ zum Ventilschaft, ist im unteren Endbereich eine das obere Stirnende aufnehmende Aussparung eingefräst. Durch den Anschlag des Werkzeugs mit dieser Aussparung am oberen Stirnende des Ventils wird die Referenzposition erzeugt. Zum Zuführen der Ventilkeile sind im Werkzeug gemäss DE 196 52 711 ferner zwei zur Längsachse symmetrische Transportkanäle vorgesehen. Die Transportkanäle laufen in Richtung Längsachse außen am Kern bis vor dessen Endbereich.

Im Werkzeug gemäss DE 196 52 711 wird, im Gegensatz zum damaligen Stand der Technik, die Funktion eines selbständigen Einfahrens der Ventilkeile unmittelbar in ihre Sollstellung am Ventilschaft realisiert. Zusätzliche Hilfsmittel wie Hebel oder Schieber, insbesondere zum radialen Zustellen der Keile, sind also nicht erforderlich in diesem gattungsgemäßen Werkzeug. Zum selbständigen Einfahren der Ventilkeile nach DE 196 52 711 ist einerseits eine Einstellbarkeit des nach innen gebogenen unteren Bereichs der Transportkanäle erforderlich. Andererseits ist dieses Prinzip maßgeblich von der genauen Positionierung des Werkzeugs relativ zum Ventilschaft abhängig, da die Ventilkeile mit ihren Federn direkt in die Ringnuten eingebracht werden sollen (siehe Fig.5 der DE 196 52 711). Bereits aufgrund von Toleranzen in Herstellung von Werkzeug und Ventilen ist, bei einer Abnahme der Referenzposition am Ventil selbst gemäß DE 196 52 711, mit einer gewissen Störanfälligkeit zu rechnen. In der Tat kann auf diese Art nicht zuverlässig gewährleistet werden, dass die Ventilkeile immer exakt in der Soll-Position eingebracht werden.

Ökonomisch gesehen ist natürlich eine hohe Zuverlässigkeit d.h. geringe Fehleranfälligkeit von verwendeten Maschinen und Werkzeuge ganz allgemein in der industriellen Fertigung und speziell im Automobil-Motorenbau erforderlich. Nur so lassen sich die gewünscht hohen Taktraten möglichst dauerhaft einhalten und Unterbrechungs- bzw. Ausschussbedingte Unkosten vermeiden.

### Aufgabe der Erfindung

Eine erste Aufgabe der vorliegenden Erfindung ist es, ein gattungsgemäßes Werkzeug zum Anbringen von Ventilkeilen dahingehend zu verbessern, dass eine geringere Fehleranfälligkeit gewährleistet wird, insbesondere auch bei variierenden Abmessungen vom Ventilschaft bzw. der Werkzeugkomponenten.

Diese Aufgabe wird durch ein Werkzeug nach Anspruch 1 bzw. ein Verfahren zu dessen Verwendung zum Anbringen von Ventilkeilen an einem Ventil nach Anspruch 13 gelöst.

### Allgemeine Beschreibung der Erfindung

Diese Aufgabe wird erfindungsgemäß in einem gattungsgemäßen Werkzeug nach dem Oberbegriff des Anspruchs 1 dadurch gelöst, dass im Endbereich des Kerns koaxial zur Längsachse eine längsgestreckte Ausnehmung zur Aufnahme eines wesentlichen oberen Abschnitts des Ventilschafts vorgesehen ist. Genauer gesagt, hat die Ausnehmung eine Tiefe welche größer oder zumindest gleich dem axialen Abstand zwischen Ringnut und Stirnende des Ventilschafts ist.

Hierdurch kann der Kern des Werkzeugs, insbesondere dessen unterer Endbereich, durch Aufnahme des oberen Abschnitts des Ventilschafts mindestens eine Ringnut zumindest teilweise vorzugsweise vollständig, und noch bevorzugter alle Ringnuten bis auf die vom Stirnende des Ventilschafts entfernteste, vollständig überdecken. Entsprechend werden die Ventilkeile unterhalb der Ringnut(en), zumindest unterhalb der oberen Ringnut(en), an die Mantelfläche eines Ventilschafts zugeführt. Das Einrasten der Ventilkeile in die Ringnuten erfolgt somit in der Reihenfolge der beim Rückhub des Werkzeugs vom Kern nacheinander freigegebenen Ringnuten.

Ein falsches Einrasten ist somit nicht mehr möglich. Die vorgeschlagene Gestaltung stellt sicher, dass die unterste Feder eines Ventilkeils stets nur in die unterste Ringnut des Ventilschafts einrasten kann. Zudem wird unter Anwendung eines ausreichenden Überhubs der genaue axiale Hub des Werkzeugs und somit die Toleranz bei Werkzeug- bzw. Ventilschaft-Herstellung irrelevant, da das vorgeschlagene Verfahren dann auch bei tieferem oder geringerem Eindringen in die Ausnehmung einwandfrei funktionieren kann.

gleitet der Ventilkeil zunächst mit dem Werkzeug am Ventilschaft axial nach oben Axiale Relativbewegung.

Bevorzugte Ausgestaltungen des Werkzeugs sind in den Unteransprüchen 2-12 definiert.

Das vorteilhafte Verfahren zum Anbringen von Ventilkeilen zwischen Federteller und Ventilschaft mit dem erfindungsgemäßen Werkzeug geht aus den nebengeordneten Verfahrensansprüchen 13 bis 15 hervor.

### Kurze Beschreibung der Figuren

Weitere Einzelheiten und Vorteile der Erfindung können der nachfolgenden ausführlichen Beschreibung möglicher Ausführungsformen der Erfindung anhand der beiliegenden Figuren entnommen werden. Diese zeigen:
FIG.1 einen Längsschnitt des Werkzeugs zum Anbringen von Ventilkeilen;
FIG.2 einen Querschnitt des Werkzeugs nach Schnittlinie II-II in FIG.1;
FIG.3 eine perspektivische teilweise aufgebrochene Seitenansicht des unteren Bereichs des Werkzeugs;
Fig. 4A-E eine Folge perspektivischer Ansichten im Längsschnitt um das obere Stirnende des Ventilschafts zur Illustration des Verfahrensablaufs beim Anbringen von Ventilkeilen mit dem Werkzeug nach FIG.1-3.

### Detaillierte Beschreibung anhand der Figuren

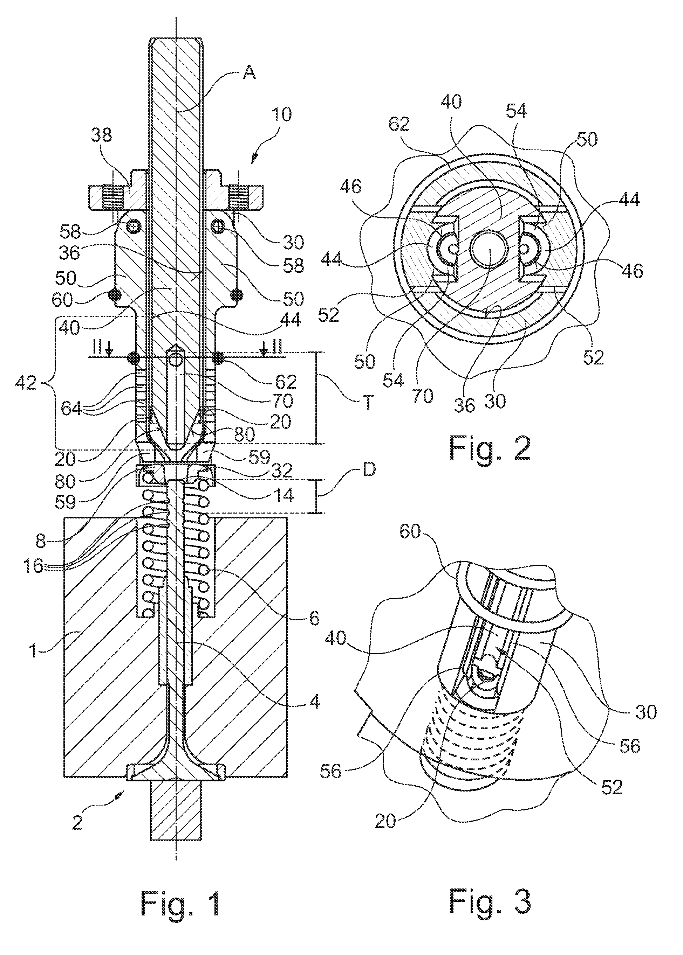

Die FIG.1 zeigt schematisch einen Teilbereich eines Zylinderkopfes 1 um ein Ventil 2. Zum Ventil 2 gehören u.a. der typische Ventilteller zum Abdichten auf dem Sitzring sowie ein Ventilschaft 4, eine Ventilfeder 6 und ein Federteller 8. Die Anordnung des Ventils 2 nach FIG.1 ist typisch bei Verbrennungsmotoren.

Der Ventilschaft 4 hat in bekannter Weise ein oberes zunächst freiliegendes Stirnende 14 sowie mindestens eine, typischerweise drei axial versetzte Ringnuten 16, an welchen Ventilkeile bei ordnungsgemäßem Anbringen einrasten.

FIG.1 zeigt ferner die bevorzugte Ausführung des erfindungsgemäßen Werkzeugs, allgemein mit 10 bezeichnet, zum Anbringen von Ventilkeilen 20 am Ventil 2.

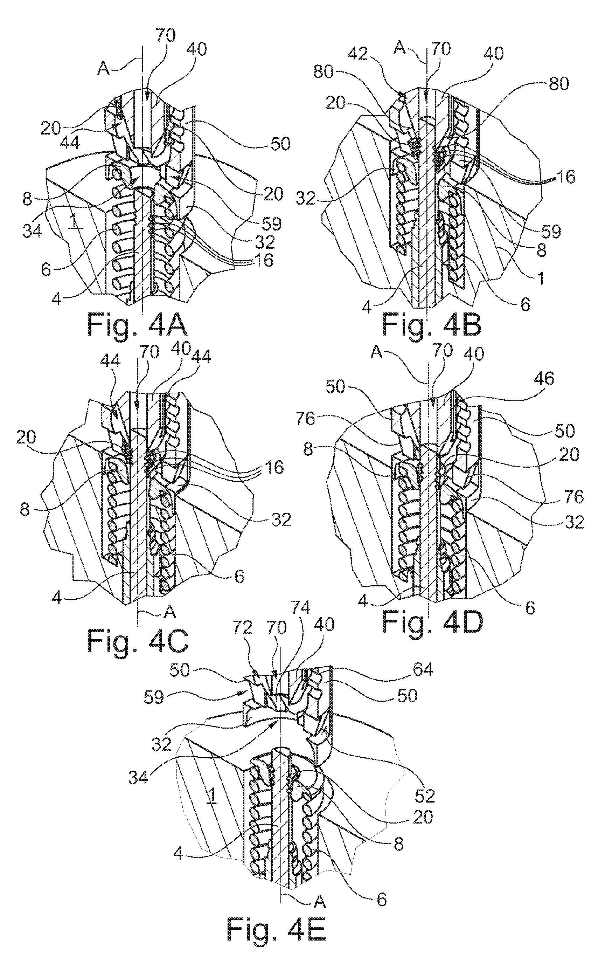

Das Werkzeug 10 hat einen lanzenartigen im wesentlichen zylindrischen Halter 30 mit einer Längsausdehnung entlang einer Längsachse A, wie aus FIG.1-3 hervorgeht. An seinem unteren Stirnende hat der Halter 30 ein sich kuppelförmig oder sphärisch nach unten aufweitendes konkaves Zentrierstück 32 zum Zentrieren des Federtellers 8 beim Herunterfahren des Werkzeuges 10 entlang der Achse A (siehe FIG.4E). Im Zentrierstück 32 bzw. im Stirnende des Halters 30 ist eine Stirnöffnung 34 vorgesehen. Im Inneren des Halters 30 ist ein annähernd zylindrischer Hohlraum 36 ausgebildet, wie aus FIG.1-2 hervorgeht. Durch die Stirnöffnung 34 kann das Stirnende 14 des Ventilschafts 4 in den Halter 30 eingeführt werden, wie aus dem Vergleich von FIG.4A mit FIG.4B hervorgeht. Am oberen Stirnende gegenüber der Stirnöffnung 34 hat der Halter 30 einen Montageflansch 38.

Das Werkzeug 10 hat weiterhin einen längsgestreckten Kern 40, welcher im Hohlraum 36 des Halters 30 koaxial zur Längsachse A angeordnet ist. Zur Seite der Stirnöffnung 34 hat der Kern 40 einen Endbereich, in FIG.1 allgemein mit 42 bezeichnet. Durch die Stirnöffnung 34 kann der Ventilschaft 4 mit seinem oberen Stirnende 14 zum Endbereich 42 des Kerns 40 bzw. in diesen hinein geführt werden, wie weiter unten näher erläutert.

Wie am besten aus FIG.2 bzw. FIG.4A-E ersichtlich, hat das Werkzeug 10 zwei Transportkanäle 44, welche im wesentlichen in Richtung der Achse A verlaufen und zwar außen am Kern 40 bis hinunter vor dessen Endbereich 42, d.h. in die Nähe der Stirnöffnung 34. Die zwei Transportkanäle 44 sind jeweils im Querschnitt Punktsymmetrisch zur Achse A ausgeführt wie in FIG.2 gezeigt. Die Transportkanäle 44 dienen zum Zuführen von Ventilkeilen 20 an das Ventil 2, genauer an dessen Ventilschaft 4, wie unten näher erläutert.

Ferner zeigen FIG.1-2 und FIG.4A-E (in FIG.3 ausgelassen), zwei Führungsbacken 50 die ebenfalls zur Längsachse A symmetrisch und zwar außen an den Führungskanälen 44 angeordnet sind. Die Führungsbacken 50 sind zumindest teilweise in entsprechend gegenüberliegenden Seitenfenstern 52 (gestrichelte Linie in FIG.2) des Halters 30 eingelassen. FIG.3 zeigt eines der Seitenfenster 52 ohne eingelassene Führungsbacke 50. Jede Führungsbacke 50 bildet nach innen eine Deckelfläche 54 zur seitlichen Begrenzung des entsprechenden Führungskanals 44. Wie in FIG.2 gezeigt, bilden somit die Führungsbacken 50, genauer deren Deckelflächen 54, zusammen mit der Außenoberfläche des Kerns 40 die seitlichen Begrenzungen (quer zur Bewegungsrichtung) der zwei Transportkanäle 44.

FIG.2 zeigt hierzu insbesondere die spezielle Geometrie des Kerns 40 dahingehend, dass Kern 40 und Führungsbacken 50 die gesamten seitlichen Begrenzungen der Transportkanäle 44 bilden. Mit anderen Wortender Halter 30 an sich ist an der Führung der Ventilkeile 20 bzw. der Bildung der Transportkanäle 44 nicht beteiligt. Somit ist bei veränderter Geometrie der Ventilkeile 20 kein vollständiger Austausch des Werkzeugs 10, sondern in der Regel nur der Austausch von Kern 40 und Führungsbacken 50 nötig. Wie aus FIG.2 ersichtlich sind die Ventilkeile 20 im Querschnitt im wesentlichen C-förmig bzw. in Form einer Halbscheibe ausgeführt. Der entsprechende freie Querschnitt der Transportkanäle 44 wird vorzugsweise erzielt einerseits durch die zylindrische Gestaltung der Deckelfläche 54 und andererseits durch eine geeignete Form-Nut oder Aussparung im Kern 40. Der Kern 40 hat somit vorzugsweise zwei zur Längsachse A symmetrische Formnuten 46 die zusammen mit den Deckelflächen 54 einen im Querschnitt C-ähnlichen, im wesentlichen brückenförmigen freien Querschnitt für die Ventilkeile 20 bilden. Wie in FIG.2 gezeigt, hat jede Form-Nut 46 einen mittigen Vorsprung entsprechend der Innefläche der Ventilkeile 20 und zwei seitliche Begrenzungswände in tangentialer Richtung um die Achse A. Diese Begrenzungswände bilden innerhalb der Fenster 52 eine Stufe 56 an welcher die Führungsbacken 50 in der Betriebsstellung fest am Kern 40 anliegen. Wie aus FIG.2 hervorgeht, ragen die Deckelflächen 54 der Führungsbacken 50 in den Bereich zwischen den seitlichen Begrenzungswänden der Formnuten 46 hinein, wodurch die Deckelflächen 54 und die Innenwände der Formnuten die gesamten seitlichen Begrenzungen der Transportkanäle 44 ausbilden. Der Querschnitt der Deckelflächen 54 ist der Außenfläche der Ventilkeile 20 entsprechend gewählt.

Nach Fig.1 sind die Führungsbacken 50 am Halter 30 mittels einer Spielpassung um einen Stift 58 schwenkbar angebracht. Die Führungsbacken 50 sind damit um eine Achse quer zur Längsachse schwenkbar und können somit ggf. nach Außen von der Achse A weg aufklappen. Um die fest vorgegebene Form der Transportkanäle 44 nichtsdestotrotz unbeeinträchtigt zu lassen sind die Führungsbacken 50 in den Anschlag mit dem Kern, genauer den Stufen 56 mit einem Federmittel vorgespannt. Dies wird vorzugsweise mittels mindestens einem O-Ring 60, 62 erzielt, welcher den Halter 30 und die Führungsbacken 50 fest umspannt. Geeignete Federmittel wirken somit gegen ein Aufschwenken der Führungsbacken 50um den Stift 58. In bevorzugter Ausgestaltung sind aus Sicherheits- und Drehmomentgründen zwei O-Ringe 60, 62. Ein oberer O-Ring 60 ist in einer Ringnut um einen oberen dickeren Abschnitt von Halter 30 und Führungsbacken 50 gespannt. Ein unterer O-Ring 62 ist in einer Ringnut um einen unteren dünneren Abschnitt gespannt, wie in FIG.1 gezeigt.

Den Führungsbacken 50 kommt somit eine Doppelfunktion zu. Einerseits bilden sie, zusammen mit den Formnuten 46 im Kern 40, anhand ihrer Deckelflächen 54 die Transportkanäle 44. Andererseits ermöglichen die gegen Federbelastung aufschwenkbaren Führungsbacken 50 das Aufweiten der Stirnöffnung 34 im Störfall, d.h. verhindern den Bruch des Werkzeugs 10, falls unerwartet doch ein Ventilkeil 20 nicht ordnungsgemäß einrasten würde bspw. bei Herstellungsfehler der Ringnuten 16 oder eines Ventilkeils 20. Die Spannkraft der O-Ringe 60, 62 ist dementsprechend so gewählt, dass die Führungsbacken 50 nur bei Verklemmen eines Ventilkeils 20 aufschwenken. Im normalen Gebrauch, d.h. bei Anliegen der Führungsbacken 50 an den Stufen 56 hat die Stirnöffnung 34 am Stirnende des Halters 30 jedoch einen Durchmesser gleich dem maximalen Außendurchmesser der am Ventilschaft 4 anliegenden Ventilkeile 20 plus minimalem Spiel zum Ein-/Ausführen des Ventilschafts 4 mit Ventilkeilen 20 durch die Stirnöffnung 34.

Im Montageflansch 38 sind in bekannter Art nicht näher gezeigte Anschlüsse für Formschläuche an die Führungskanäle 44 vorgesehen. Diese dienen zur Zuführung bzw. zum Zuschießen der Ventilkeile 20 mittels Druckluft. Vorteilhaft umfassen die Führungsbacken 50 als dritte Funktion jeweils eine oder mehrere Entlüftungsöffnungen 64 von der inneren Deckelfläche 54 nach Außen, wie in FIG.1 gezeigt. Durch die Entlüftungsöffnungen 64 wird der entsprechende Transportkanal 44 entlüftet um eine widerstandsfreie Zuführung der Ventilkeile 20 zu erreichen. Bevor eine weitere vierte Funktion der Führungsbacken 50 erläutert wird, soll nun allerdings auf die Gestaltung des Kerns 40 gemäss der Erfindung eingegangen werden.

Wie klar aus FIG.1-2 und FIG.4A-E hervorgeht, ist im Endbereich 42 des Kerns 40 koaxial zur Längsachse A eine längsgestreckte Ausnehmung 70 vorgesehen. Diese Ausnehmung dient der Aufnahme eines wesentlichen oberen Abschnitts des Ventilschafts 4 in den Kern 40 hinein, genauer in dessen funktionalen Endbereich 42, welcher durch die Tiefe eben dieser Ausnehmung 70 definiert werden kann. Die Ausnehmung 70 mündet in bzw. fluchtet koaxial mit der Stirnöffnung 34.

Wie aus FIG.1 hervorgeht ist die Tiefe T der Ausnehmung 70 deutlich größer als der größte axiale Abstand zwischen Stirnende 14 und einer Ringnut 16 des Ventilschafts 4, d.h. zwischen Stirnende 14 und unterster Ringnut 16. Zumindest ist die Tiefe T erfindungsgemäß jedoch gleich dem axialen Abstand zwischen Stirnende 14 und der untersten Ringnut des Ventilschafts 4, so dass alle Ringnuten 16 oberhalb der untersten Ringnut durch den Kern aufgenommen d.h. überdeckt und vom Zugang gesperrt werden können. Somit kann durch ausreichenden axialen Hub (Überhub) des Werkzeugs 10 verhindert werden, dass die Federn der Ventilkeile 20 falsch einrasten, d.h. anders als mit der untersten Feder in die unterste Ringnut 16 einrasten. Anderseits werden durch den Kern 40 beim Rückhub die Ringnuten 16 nur sukzessiv freigegeben, Typischerweise hat ein Ventil, wie aus FIG.4A-E ersichtlich, drei Ringnuten und die Tiefe T ist so gewählt dass alle drei Ringnuten 16 hinreichend tief in der Ausnehmung versenkt werden können (Überhub) um die Toleranz bzgl. Maßunterschieden und Hub zu erhöhen.

Dementsprechend werden die Ventilkeile 20 mit dem vorgeschlagenen Werkzeug 10, nicht wie beim Stand der Technik üblich (siehe DE 196 52 711), in ihrer axialen Endposition zum Ventilschaft 4 zugeführt. Vielmehr ermöglicht das vorgeschlagene Werkzeug 10 anhand insbesondere der Ausnehmung 70 mit ausreichender Tiefe T, die Zustellung der Ventilkeile 20 unterhalb der untersten Ringnut 16 und zwar an die Mantelfläche des Ventilschafts 4 und anschließend ein sukzessives Freigeben einzelner Ringnuten 16. Nebst der Verhinderung falschen Einrastens, wird zudem eine höhere Fehler-Toleranz in axialer Richtung erzielt, da die genaue Position des Zustellens an die Mantelfläche unerheblich ist, insofern ausreichender Überhub erfolgt. Die Ausnehmung 70 im unteren Endbereich 42 ist bevorzugt als Sacklochbohrung in einem zumindest im Endbereich aus Vollmaterial bestehenden Kern 40 ausgeführt. Der Innendurchmesser der Ausnehmung 70 ist in etwa gleich dem Außendurchmesser des Ventilschafts 4 plus minimalem Spiel zum Ein-/Ausführen des Ventilschafts 4 in die Ausnehmung 70 plus ggf. erforderliche Toleranz.

Wie aus FIG.4B hervorgeht bewirkt das Werkzeug weiterhin vorzugsweise ein Anliegen bzw. Streifen der Ventilkeile 20 nur mit ihrer untersten Feder am Ventilschaft 4. Dies kann vorzugsweise durch folgende Merkmaler erzielt werden: Wie aus FIG.1, FIG.3 und bspw. FIG.4B ersichtlich hat der untere Teil des Endbereichs 42 außen symmetrisch zur Längsachse A zwei zur Stirnöffnung 34 bzw. zur Mündung der Ausnehmung 70 hin zulaufende flache Abschrägungen 80. Die Oberflächen dieser Abschrägungen 70 bilden mit der Längsachse A jeweils einen (kleinsten) Winkel im Bereich von 20-30° (20 bis 30 x II/180 in Bogenmass), und vorzugsweise im Bereich 22,5-27,5°. Entsprechende Abschrägungen tragen dazu bei, ein inkorrektes Einrasten der Ventilkeile zu vermeiden. Zudem wird durch die Abschrägungen 70 eine gabelartige Überstülpung der Ringnuten 16 bewirkt. Ebenfalls zum geeigneten Anbringen der Ventilkeile 20 wird folgende Ausgestaltung der Führungsbacken 50 bevorzugt: jede Führungsbacke 50 hat einen Endabschnitt 59 mit einer speziell geformten kurvigen inneren Gleitfläche. Wie in FIG.4E gezeigt hat jede Gleitfläche innen am Endabschnitt 59 einen oberen Bereich 72, welcher der jeweiligen Abschrägung 70 am Kern 40 gegenüberliegt, und zunächst zur Längsachse A hin kuppelförmig konkav gekrümmt. Weiterhin hat der Endabschnitt 59 jedes Führungsbacken 50 einem unteren Bereich 74 zur Stirnöffnung 34 angrenzend und letztere zusammen mit dem Halter 30 bildend. Der unter Bereich 74 hingegen ist nicht konkav sondern konvex gekrümmt. Vorzugsweise liegt der Wendepunkt zwischen konkavem Bereich 72 und konvexem Bereich 74 unterhalb des Endbereichs 42 des Kerns 40, was in der Praxis besonders gute Resultate beim Zustellen der Ventilkeile 20 liefert. Schließlich kann die Führung der Ventilkeile 20 noch dahingehend optimiert werden, dass mittig im Endabschnitt 59 jeder Backe jeweils eine Nut 76 (siehe FIG.4D) quer zur Längsachse A eingebracht ist, so dass die Gleitflächen im Bereich 72 und/oder im Bereich 74 jeweils zwei innenliegende Kanten als Auflager zum Führen der Ventilkeile 20 aufweisen, wodurch eine Linienauflage und somit ein Kippen oder Klapper vermieden werden kann und zudem das Andrücken der Ventilkeile 20 an den Ventilschaft 4 durch die Druckluftströmung begünstigt wird. Dem unteren Endabschnitt 59 der Führungsbacken 50 kommt somit noch die hervorzuhebende Funktion zu, die Ventilkeile in geeignete Schräglage zu versetzen um das gewünschte Andrücken an die Mantelfläche des Ventilschafts 4, d.h. mit daran streifender unterer Feder, zu erzielen.

Abschließend soll anhand der in Ablauffolge aufeinanderfolgenden Positionen des Werkzeugs nach FIG.4A-E nochmals auf die Funktionsweise eingegangen werden.

FIG.4A entspricht der Zuführung des Werkzeugs 10 an den Ventilschaft wobei der Federteller 8 anhand des Zentrierstücks 32 koaxial zur Achse A ausgerichtet wird. In dieser Position beginnt das Überdrücken d.h. über Betriebskompression hinaus gehende Stauchen der Feder 6. Zwei Ventilkeile 20 sind in Bewegung zum Endabschnitt 59 der Führungsbacken 50 hin.

FIG.4B zeigt bereits die Position in welcher der unterhalb der Ringnuten 16 zwei Ventilkeile 20 durch den jeweiligen Transportkanal 44 an die Mantelfläche des Ventilschafts 4 zugeführt wurden. Aufgrund der speziellen Gestaltung des Endabschnitts 59 und des Winkels der Abschrägungen 70 wird jeder Ventilkeil 20 so an den Ventilschaft 4 angedrückt, dass nur die untere Feder an der Mantelfläche des Ventilschafts 4 unterhalb der Ringnuten 16 streift. Der Kern 40 versperrt zumindest die oberen Ringnuten 16. Hervorzuheben ist also, dass hierzu der Ventilschaft 4 ausreichend tief in die Ausnehmung 70 eingeführt werden muss. Mit anderen Worten wird der obere Abschnitt des Ventilschafts 4 so tief axial in die Ausnehmung 70 des Kerns 40 hinein eingeführt wird, dass der Kern 40 die mindestens eine Ringnut 16 (FIG.4B), vorzugsweise alle Ringnuten 16 des Ventils (nicht gezeigt, aber in der Sequenz an Position nach FIG.4B vorangehend), überdeckt. Anzumerken ist, dass die Ventilkeile durch Druckluft oder auch einfach durch Schwerkraft in der Position gemäss FIG.4B gehalten werden können.

FIG.4C zeigt eine Position in der das Werkzeug 10 bereits wieder im Rückhub nach oben bewegt wird. Aufgrund der speziellen Gestaltung des Endabschnitts 59 und des Winkels der Abschrägungen 70 streift jeder Ventilkeil 20 zunächst nur mit seiner untersten Feder an der Mantelfläche des Ventilschafts 4. Bei axialer Übereinstimmung von unterster Feder und unterster Ringnut 16 des Ventilschafts 4 rastet dann diese Feder des jeweiligen Ventilkeils 20 in die unterste Ringnut 16 ein wie in FIG.4C gezeigt. Zu beachten ist, dass gerade nur die unterste Ringnut 16 als einzige beim Rückhub zuerst komplett freigeben wird, wodurch falsches d.h. axial versetztes Einrasten zuverlässig vermieden wird. Ab dieser Position nach FIG.4C bewegen sich die Ventilkeile 20 nicht mehr weiter vertikal nach oben, so dass eine Relativbewegung zwischen Werkzeug 10 und den Ventilkeilen 20 entsteht. Bei dieser Relativbewegung werden der Kern 40 und die Führungsbacken 50 weiterhin nach oben bewegt und der Ventilkeil 20 dabei aufgerichtet. Dabei rastet der Ventilkeil 20 in die restlich aufeinanderfolgend und komplett vom Kern 40 freigegebenen Ringnuten 16 ein. Somit klappen aufgrund der speziellen Gestaltung des Endabschnitts 59 der Führungsbacken 50 und Geometrie des Endbereichs 42 des Kerns 40 die Ventilkeile anschließend in die in FIG.4D gezeigte Position.

FIG.4D zeigt die korrekt in die Ringnuten 16 eingerasteten Ventilkeile 20. Der Federteller 8 ist allerdings noch nicht in der Gebrauchstellung, in welcher seine innere Öffnung die Ventilkeile 20 umgibt und am Ventilschaft 4 festhält, wie in der Endstellung in FIG.4E gezeigt.

FIG.4E zeigt die End- bzw. Anfangstellung in welcher die Ventilkeile 20 zwischen Federteller und Ventilschaft angebracht sind und das Werkzeug erneut verwendet werden kann zum Anbringen von Ventilkeilen bei einem weiteren zu montierenden Ventil.

## Patentansprüche

1. Werkzeug (10) zum Anbringen von Ventilkeilen (20) an einem Ventil (2) eines Motors, welches einen Ventilschaft (4) mit einem oberen Stirnende (14) und mindestens eine Ringnut (16) zum Befestigen der Ventilkeile (20) aufweist, und das Werkzeug umfasst:
einen längsgestreckten Halter (30) mit einer Längsachse (A), einem inneren Hohlraum (36) und einer Stirnöffnung (34) durch welche das Stirnende (14) des Ventilschafts (4) in den Hohlraum des Halters eingeführt werden kann;
einen längsgestreckten Kern (40) welcher im Hohlraum (36) des Halters (30) koaxial zur Längsachse (A) angeordnet ist und einen Endbereich (42) aufweist, welcher durch die Stirnöffnung (34) zugänglich ist; und
mindestens ein Transportkanal (44), vorzugsweise zwei zur Längsachse (A) symmetrische Transportkanäle (44), welcher in Richtung der Längsachse Außen am Kern (40) und bis vor den Endbereich (42) des Kerns verläuft, zum Zuführen von Ventilkeilen (20) an ein Ventil;
**dadurch gekennzeichnet dass**
im Endbereich (42) des Kerns (40) koaxial zur Längsachse (A) eine längsgestreckte Ausnehmung (70) zur Aufnahme eines wesentlichen oberen Abschnitts des Ventilschafts (4) vorgesehen ist, wobei die Ausnehmung (70) des Kerns (40) in die Stirnöffnung (34) mündet und eine Tiefe (T) aufweist welche größer oder zumindest gleich dem axialen Abstand (D) zwischen Stirnende und Ringnut des Ventilschafts ist, so dass der Kern (40), insbesondere der Endbereich (42), bei Aufnahme des oberen Abschnitts eines Ventilschafts (4), die mindestens eine Ringnut (16) zumindest teilweise überdeckt, so dass die Ventilkeile (20) unterhalb der mindestens einen Ringnut (16) an die Mantelfläche eines Ventilschafts (4) zugeführt werden können.

2. Werkzeug nach Anspruch 1, umfassend zwei zur Längsachse symmetrische Transportkanäle (44) und zwei zur Längsachse symmetrisch angeordnete Führungsbacken (50), welche jeweils in einem Seitenfenster (52) des Halters (30) angeordnet sind, in der Betriebsstellung am Kern (40) anliegen und eine im wesentlichen zylindrische innere Deckelfläche (54) im Abstand zum Kern (40) aufweisen, wobei Kern (40) und Backen (50) seitliche Begrenzungen der zwei Transportkanäle (44) bilden.

3. Werkzeug nach Anspruch 2, wobei der Kern (40) zwei zur Längsachse symmetrische Formnuten (46) aufweist jeweils mit einem mittigen Vorsprung und zwei seitlichen Begrenzungswänden und wobei die Innenwände der Formnuten (46) zusammen mit den Deckelflächen (54) der Führungsbacken in fest vorgegebenem Querschnitt, vorzugsweise im Querschnitt annähernd C-förmig, die gesamten seitlichen Begrenzungen der Transportkanäle (44) ausbilden.

4. Werkzeug nach Anspruch 2 oder 3 wobei jede Führungsbacke (50) am Halter (30) schwenkbar angebracht ist, insbesondere um eine Achse quer zur Längsachse (A) schwenkbar, und mittels mindestens einem elastischen Spannmittel, vorzugsweise einem die Führungsbacken (50) und den Halter (30) eng umschließenden O-Ring (60, 62), in Anschlag an den Kern (40) gespannt ist.

5. Werkzeug nach einem der voranstehenden Ansprüche, wobei der Endbereich (42) des Kerns symmetrisch zur Längsachse (A) zwei zur Stirnöffnung (34) zulaufende flache Abschrägungen (80) aufweist mit Oberflächen der Abschrägungen welche mit der Längsachse (A) jeweils einen Winkel im Bereich von 20-30 vorzugsweise im Bereich 22,5-27,5° bilden.

6. Werkzeug nach einem der Ansprüche 2-4 und nach Anspruch 5, wobei jede Führungsbacke (50) einen Endabschnitt (59) mit einer inneren Gleitfläche umfasst, welche Gleitfläche in einem oberen Bereich (72), welcher der jeweiligen Abschrägung (80) am Kern (40) gegenüberliegt, zunächst zur Längsachse (A) hin kuppelförmig konkav gekrümmt ist und in einem unteren Bereich (74) zur Stirnöffnung (34) konvex gekrümmt ist, vorzugsweise mit einem Wendepunkt unterhalb des Endbereichs (42) des Kerns.

7. Werkzeug nach einem der Ansprüche 2-6, wobei mittig im Endabschnitt (59) jeder Führungsbacke (50) eine Nut (76) quer zur Längsachse (A) eingebracht ist, so dass die Gleitflächen zwei innenliegende Kanten als Auflager zum Führen der Ventilkeile aufweisen.

8. Werkzeug nach einem der einem der Ansprüche 2-7, wobei der Halter (30) weiterhin einen der Stirnöffnung (34) gegenüberliegenden Montageflansch (38) mit einem Anschluss für Formschläuche an die Führungskanäle (44) umfasst, so dass die Ventilkeile (20) mit Druckluft durch die Formschläuche und die Führungskanäle (44) zugeschossen werden können, und wobei jede Führungsbacke (50) mindestens eine Entlüftungsöffnung (64) von ihrer Deckelfläche (54) nach Außen aufweist.

9. Werkzeug nach einem der voranstehenden Ansprüche, wobei der Kern als Vollkern ausgeführt ist und im unteren Endbereich als Ausnehmung eine Sacklochbohrung aufweist, deren Innendurchmesser dem Außendurchmesser des Ventilschafts plus minimalem Spiel zum Ein-/Ausführen des Ventilschafts entspricht.

10. Werkzeug nach einem der voranstehenden Ansprüche, wobei der Ventilschaft (4) mindestens zwei, insbesondere drei, Ringnuten (16) aufweist, und die Ausnehmung eine Tiefe (T) aufweist welche gleich oder größer ist als der axiale Abstand entlang der Längsachse (A) zwischen Stirnende (14) und derjenigen Ringnut (16) des Ventilschafts (4) welche den größten axialen Abstand (D) zum Stirnende (14) hat.

11. Werkzeug nach einem der voranstehenden Ansprüche, wobei der Halter am Stirnende die Stirnöffnung (34) umgebend mit einem sich nach unten aufweitenden Zentrierstück (32) zum Zentrieren des Federtellers (8) versehen ist.

12. Werkzeug nach einem der voranstehenden Ansprüche, wobei die Stirnöffnung (34) am Stirnende des Halters bei am Kern (40) anliegenden Führungsbacken (50) einen Innendurchmesser hat der dem maximalen Außendurchmesser der am Ventilschaft (4) anliegenden Ventilkeile (20) plus minimalem Spiel zum Ein-/Ausführen entspricht.

13. Verfahren zum Anbringen von Ventilkeilen zwischen Federteller und Ventilschaft eines Ein- oder Auslass-Ventils am Zylinderkopf eines Verbrennungsmotors unter Verwendung eines Werkzeugs nach einem der voranstehenden Ansprüche, wobei
der Halter mit innenliegendem Kern dem Ventil axial zugeführt wird;
mittels eines Zentrierstücks um die Stirnöffnung des Halters der Federteller zentriert und die Feder des Ventils zusammengedrückt wird;
**dadurch gekennzeichnet dass:**
der obere Abschnitt eines Ventilschafts so tief axial in die Ausnehmung des Kerns hinein eingeführt wird, dass der Kern die mindestens eine Ringnut, vorzugsweise alle Ringnuten des Ventils, überdeckt; und
bei überdeckter Ringnut bzw. überdeckten Ringnuten zwei Ventilkeile durch den jeweiligen Transportkanal unterhalb der mindestens einen Ringnut an die Mantelfläche des Ventilschafts zugeführt werden.

14. Verfahren nach Anspruch 13, wobei:
der Halter mit innenliegendem Kern anschließend vom Ventil axial weggeführt wird;
die Ventilkeile vor dem Endbereich des Kerns und über der Stirnöffnung derart schräg gehalten werden dass nur die unterste Feder des Ventilkeils an der Mantelfläche streift, wodurch lediglich die unterste Feder des Ventilkeils in die zuerst vom Kern freigegebene unterste Ringnut des Ventilschafts einrastet.

15. Verfahren nach Anspruch 13 oder 14, wobei die Ventilkeile mittels Druckluft durch die Transportkanäle zugeschossen werden und bis zum vollständigen Abnehmen des Werkzeugs vom Ventil mit Druckluft beaufschlagt und an den Ventilschaft gedrückt werden.
